# EUROPÄISCHE PATENTANMELDUNG

(11) **EP 1 253 691 A1**
(43) Veröffentlichungstag der Anmeldung: **30.10.2002**
(21) Anmeldenummer: 01109834.0
(22) Anmeldetag: 23.04.2001
(51) Int. Cl.: H02G 3/18, H02G 3/38

(54) **Durchgangs- und Anschlussdose**

(71) Anmelder: WOERTZ AG, CH-4132 Muttenz 1 (CH)
(72) Erfinder: Haby, Claude, 68300 Saint-Louis (FR)
(74) Vertreter: Troesch Scheidegger Werner AG

(57) **Zusammenfassung**

Die erfindungsgemässen Durchgangs- und Anschlussdosen weisen ein Kastengehäuse (1) mit darin lösbar angeordnetem Abdeckelement (6), vorzugsweise einem aus geschäumten Kunststoff bestehenden Quader, auf, sowie einem Rahmen (8) mit aus der Rahmenöffnung (8') nach oben abragenden und in der Höhe einstellbaren Kragen (10) auf. In einem ersten Schritt wird das Armierungsgitter (2) des Kastengehäuses (1) über der Schalung (5) des zu erstellenden Bodens mit der entsprechenden Armierung (3) verbunden und dann der Beton eingebracht. Anschliessend kann das Abdeckelement (6) aus dem Kastengehäuse (1) entfernt werden, wodurch ein Hohlraum im Betonboden gebildet wird. Über diesem Hohlraum resp. dem Kastengehäuse (1) kann nun der Rahmen (8) mit der Oberfläche des Betonbodens in der gewünschten Position in Bezug auf den Betonboden verbunden werden, praktisch unabhängig von der genauen Lage des Kastengehäuses (1). Damit lässt sich eine exakte und niveaugerechte Positionierung des Rahmens (8) und des Kragens (10) erzielen, welche unabhängig von Positionierungsfehlern des Kastengehäuses (1) ist, welche durch das Einbringen des Betons und nicht exakte Lage der Schalung (5) und/oder der Armierungseisen (3) hervorgerufen werden können.

## Beschreibung

Die vorliegende Erfindung betrifft eine Durchgangs- und Anschlussdose nach dem Oberbegriff von Anspruch 1 sowie ein Verfahren zur Anwendung derartiger Durchgangs- und Anschlussdosen nach dem Oberbegriff von Anspruch 11.

Durchgangs- und Anschlussdosen werden im Baubereich eingesetzt, um in Böden, Wänden und Decken verlaufende Installationen, insbesondere sanitäre und elektrische Installationsleitungen resp. -rohre, nach der Fertigstellung des Gebäudes von Aussen zugänglich zu machen.

Herkömmlicherweise werden beispielsweise Betondecken derart aufgebaut, dass zuerst eine Schalung erstellt wird, und daran Armierungseisen mit Abstandhaltern befestigt werden, und danach auf diese Schalung feuchter bis flüssiger Beton geschüttet oder gespritzt wird, bis die gewünschte Rohbetondicke erreicht ist. Auf diesen Rohbetonboden werden anschiessend Installationsrohre, beispielsweise für die elektrischen und sanitären Installationen, und Unterflurkanäle verlegt, wobei in den Anschlussbereichen Durchgangsund Anschlusskästen befestigt werden.

Die in der Regel höhenverstellbaren Rahmen der Durchgangsund Anschlusskästen werden anschliessend mittels Messgeräten, beispielweise Lasermessgeräten, auf die zu erstellende Höhe des Bodens eingemessen und eingestellt und mit einem provisorischen Deckel abgedeckt. Danach kann der Betonüberzug eingebracht werden, welcher die Installationsrohre überdeckt und bis auf die Höhe der Flanschen der Rahmen der Durchgangs- und Anschlusskästen gebracht wird. Die minimale Höhe eines solchen Betonüberzuges beträgt ca. 62mm aufgrund der Spezifikationen der Durchgangs- und Anschlusskästen, welche u.a. elektrische Steckdosen aufzunehmen haben.

Es sind auch Durchgangs- und Anschlusskästen bekannt, welche über Stützen direkt mit der Schalung verbunden werden können, und damit für Betondecken ohne Überzugsschicht verwendet werden können. Auch bei diesen Durchgangs- und Anschlusskästen bestimmt die Oberkante des höhenverstellbaren Rahmens die Endhöhe der Betondecke. Ein Nachteil des Einsatzes von Stützen ist darin zu sehen, dass diese an der Unterseite der fertigen Betondecke infolge Rost, Flecken bilden können, welche zumindest aus optischen Aspekten nicht erwünscht sind.

Der Nachteil bei beiden Arten der bekannten Durchgangs- und Anschlusskästen liegt einerseits darin, dass sie eine aufwändige und zeitraubende Ausrichtung und Vermessung bedingen, und andererseits immer die Gefahr besteht, dass sie sich beim Einbringen des Betons verschieben und damit nicht genau fluchtend mit der Oberkante des fertigen Bodens ausgerichtet sind.

Die Aufgabe der vorliegenden Erfindung bestand nun darin, eine Durchgangs- und Anschlussdose der genannten Art zu finden, welche sich einfach und ohne grossen Aufwand vor dem Einbringen des Betons positionieren lässt und einen mit der fertigen Betonoberfläche passgenauen Rahmen bereitstellt.

Diese Aufgabe wird erfindungsgemäss mit einer Durchgangsund Anschlussdose mit den kennzeichnenden Merkmalen nach Anspruch 1 gelöst.

Bevorzugte Ausführungsformen der Erfindung ergeben sich aus den weiteren Ansprüchen 2 bis 10.

Die Ausgestaltung der Anschlussdose mit einem Kastengehäuse und einem davon getrennten Rahmen mit Kragen führt vorteilhaft zu einer Entkopplung allfälliger Positionierungs- und Lagefehler des Kastengehäuses durch das Einfüllen des Betons für den Boden. Derartige Lagefehler können durch die praktisch freie Befestigung des Rahmens auf der fertigen Bodenoberfläche vermieden werden, wobei auch eine exakte Positionierung garantiert werden kann, da diese bezüglich des bereits erstellten Rohbodens erfolgen kann.

Durch die bevorzugte Wahl von geschäumtem Kunststoff als Material für das Abdeckelement kann vor der Positionierung des Rahmens die Oberfläche des Rohbetonbodens vorteilhaft bearbeitet werden, wobei die Abdeckfunktion beibehalten wird. Das Abdeckelement lässt sich auch nach der Aushärtung des Betons einfach vom Kastengehäuse lösen, und bildet somit den für die spätere Aufnahme des Rahmens notwendigen Hohlraum. Nach dem Ein- resp. Aufsetzen des Rahmens auf die Oberfläche des Bodens im Bereich des Hohlraumes kann die Öffnung des Rahmens während der Bauphase durch eine Abdeckung verschlossen werden, wodurch ein Eindringen von Fremdkörpern und/oder Schmutz in die Öffnung verhindert wird.

Vorzugsweise wird das Abdeckelement und das Kastengehäuse mit dem Armierungsgitter durch Bänder miteinander zusammengehalten. Diese Fixierung genügt einerseits für das Zusammenhalten dieser Elemente vor und bis zum Einbringen des Betons und erlaubt auch anschliessend das einfache Lösen des Abdeckelementes. Andererseits wird dadurch auch die Bildung von Rost weitgehend verhindert und damit auch die Bildung von Rostflecken auf der Unterseite des Betonbodens, welcher häufig die Sichtseite von Decken bildet.

Erfindungsgemäss werden derartige Abdeck- und Anschlusselemente entsprechend den kennzeichnenden Merkmalen von Anspruch 11 verwendet. Bevorzugte Ausführungsformen ergeben sich aus den Merkmalen der weiteren Ansprüche 12 bis 13.

Ein Ausführungsbeispiel der vorliegenden Erfindung wird nachstehend anhand von Zeichnungen noch näher erläutert. Es zeigen:
Fig. 1 - Fig. 6 die erfindungsgemässen Schritte vom Anbringen einer erfindungsgemässen Anschlussdose mit Armierungsgitter in den Schalungsbereich eines Betonbodens bis zur deren Endlage im fertigen Boden;
Fig. 7 die Ansicht des Kastengehäuses einer erfindungsgemässen Anschlussdose mit eingesetztem Abdeckelement; und
Fig. 8 die Ansicht des Rahmens einer erfindungsgemässen Anschlussdose mit zugehörigem Kragen.

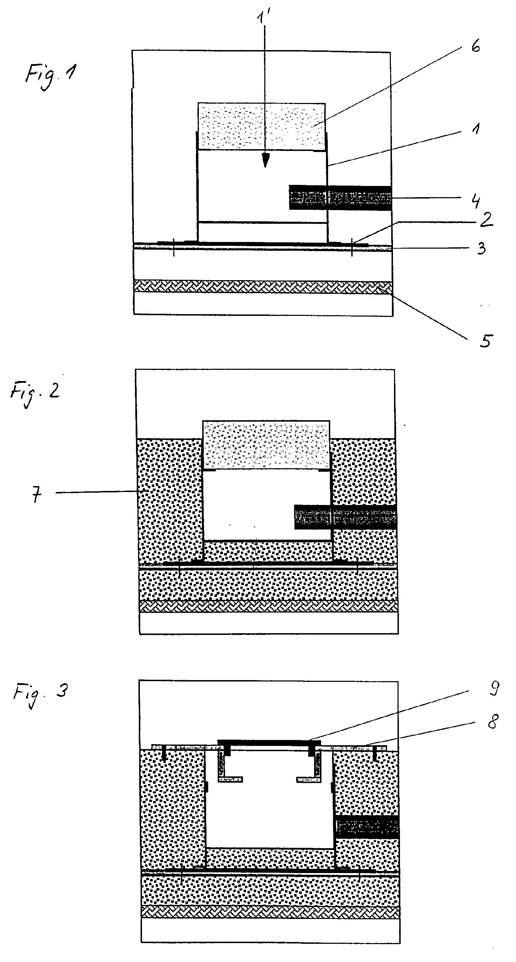

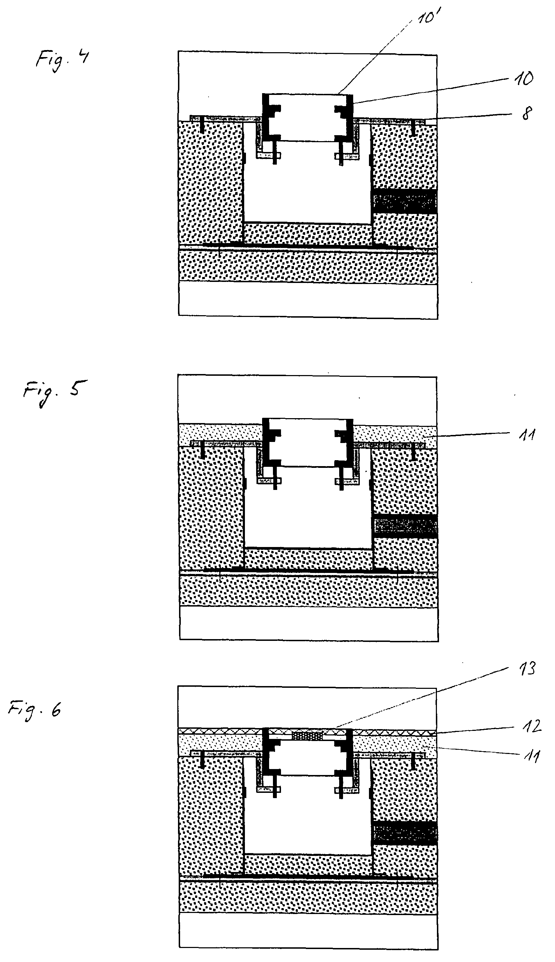

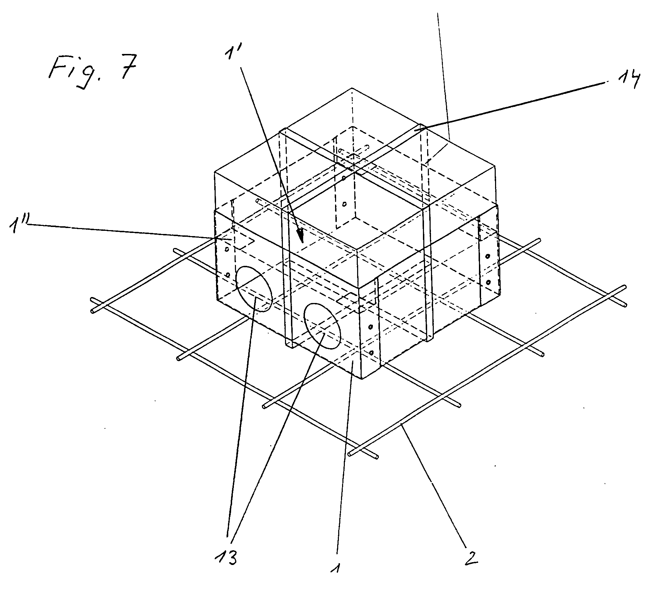

In Figur 1 ist der Längsschnitt durch das Kastengehäuse 1 einer erfindungsgemässen Anschlussdose dargestellt. Am Boden des Kastengehäuses 1 ist ein Armierungsgitter 2 angeschweisst, welches mit den Armierungseisen 3 des zu fertigenden Betonbodens verbunden werden kann. Seitlich in das Kastengehäuse 1 ist beispielsweise ein Leitungsrohr 4 hineingeführt, in welchem beispielsweise elektrische Kabel verlegt werden können. Unterhalb der Anordnung ist die Schalung 5 für das Erstellen des Betonbodens dargestellt.

Im oberen Bereich des Kastengehäuses 1 ist ein Abdeckelement 6 eingesetzt, vorzugsweise bestehend aus einem rechteckförmigen Block aus geschäumtem Kunststoff, wie beispielsweise Styropor. Die Oberkante dieses Abdeckelementes 6 ragt über die Oberkante des Kastengehäuses 1 heraus.

Die Verbindung zwischen dem Kastengehäuse 1 und den Armierungseisen 3 kann vorzugsweise mittels Drahtbindern erfolgen, welche das Armierungsgitter 2 des Kastengehäuses 1 mit den Armierungseisen 3 verbinden. Damit kann eine genügend starre Verbindung vor dem Einbringen des Betons in die Schalung 5 erzielt werden und es werden vorteilhaft Einflüsse auf die Unterseite des fertig erstellten Bodens vermieden, welche herkömmlicherweise beim Einsatz von Stützen, welche bis an die Schalung reichen, auftreten können und zu störenden Effekten wie beispielsweise Rostflecken führen können.

Nun wird der Beton 7 in die Schalung 5 eingebracht, wie dies in Figur 2 dargestellt ist. Dabei werden die Armierungsgitter 2, Armierungseisen 3 und Leitungsrohre 4 sowie das Kastengehäuse 1 vom Beton 7 bedeckt. Die Oberfläche des Abdeckelementes 6 überragt dabei die Oberfläche des fertigen Betons 7. Nach dem An- resp. Austrocknen des Betons 7 kann das Abdeckelement 6 aus dem Kastengehäuse 1 entfernt werden.

Dadurch, dass das Abdeckelement 6 lösbar im Kastengehäuse 1 eingelegt ist, kann es auch einfach daraus entfernt werden. Unterstützt wird dies durch die Materialwahl dieses Abdeckelementes 6, welches vorzugsweise aus einem geschäumten Kunststoff besteht. Dies hat weiter den Vorteil, dass die Oberfläche des Betons 7 beispielsweise noch bearbeitet werden kann, beispielsweise auf eine vorgegebene Höhe abgefräst und geebnet werden kann. Dabei wird das Abdeckelement 6 einfach mit bearbeitet, was aufgrund des Materials kein Problem darstellt, und gleichzeitig bleibt vorteilhaft die Abdeckfunktion des Abdeckelementes 6 erhalten.

Anschliessend kann der Rahmen 8 der Anschlussdose im Bereich der Öffnung 1' des Kastengehäuses 1 auf den Betonboden 7 aufgebracht und damit verbunden werden, wie dies in Figur 3 dargestellt ist. Dieser Rahmen 8 kann nun ausgerichtet und plan mit der Oberfläche des Betons 7 angebracht werden, unabhängig von der genauen Lage des darunter angeordneten Kastengehäuses 1. Dies hat den Vorteil, dass auch bei leicht verschobenem oder verkanteten Kastengehäuse 1 ein in Bezug auf die Oberfläche des Betons 7 planer Rahmen 8 angebracht werden kann, welche auch noch in gewissen Grenzen horizontal verschiebbar resp. ausrichtbar ist.

Die Öffnung 8' des Rahmens 8 kann, wie hier dargestellt, in dieser Phase mit einem lösbaren Abdeckblech 9 verschlossen sein, damit das Innere des Kastengehäuses 1 vor einer allfälliger Verschmutzung durch Partikel oder Staub verschont bleibt.

Anschliessend kann nun ein gegenüber dem Rahmen 8 höhenverstellbarer Kragen 10 in die Öffnung 8' des Rahmens 8 eingebracht werden, wie dies in Figur 4 dargestellt ist. Die Oberkante 10' des Kragens 10 wird nun auf die endgültige resp. geplante Höhe der Endoberfläche des fertigen Bodens eingestellt. Dabei können die auf den Rohboden aufzubringenden Bodenbeläge, resp. deren Höhe, bereits mitberücksichtig werden.

Nun kann der Betonüberzug 11 auf den Beton 7 aufgebracht werden, wie dies in Figur 5 dargestellt ist. Die Oberkante des fertigen Betonüberzuges 11 kommt hier leicht unterhalb der Oberkante 10' des Kragens 10 zu liegen.

Anschliessend kann nun noch der Bodenbelag 12 auf den Betonüberzug 11 aufgebracht werden, wie dies in Figur 6 dargestellt ist. Die Höhe dieses Überzuges liegt nun bündig mit der Höhe der Oberkante 10' des Kragens 10. Für die Abdeckung der Öffnung des Kragens 10 kann nun ein Deckel 13 eingesetzt werden, welcher in beliebiger Weise ausgestaltet sein kann, vorteilhaft nach oben mit demselben Material wie der Bodenbelag 12 ausgestattet ist.

Auf die dargestellt Weise können auf einfache Art mit einfachen Mitteln und geringem Aufwand genau positionierte Anschlussdosen in Betonböden realisiert werden. Durch die Trennung zwischen Kastengehäuse 1 und Rahmen 8 kann insbesondere die Phase der Einbringung und Erstellung des Rohbodens vereinfacht und verkürzt werden, ohne dass dadurch die Qualität der Positionierung der Anschlussdosen leidet.

In Figur 7 ist nun noch detaillierter die Ansicht eines erfindungsgemäss ausgestalteten Kastengehäuses 1 mit eingesetztem Abdeckelement 6 dargestellt. Das Kastengehäuse 1 wird beispielsweise durch ein genietetes Blechgehäuse gebildet, welches in den Seitenwänden Öffnungen 13 zur Einführung von Leitungen 4 aufweist. An der Unterseite des Kastengehäuses 1 ist ein Armierungsgitter 2 angeschweisst. Damit kann das Kastengehäuse 1 einfach mit Armierungseisen 3 (in Figur 7 nicht dargestellt) des Bodens verbunden werden. Die obere Öffnung 1' des Kastengehäuses 1 ist erfindungsgemäss mit dem Abdeckelement 6 abgedeckt, resp. ausgefüllt. Die lösbare Befestigung wird vorzugsweise mittels eines oder mehrerer Bänder 14, beispielsweise Kunststoffbänder, realisiert. Diese können zum Lösen des Abdeckelementes 6 einfach aufgeschnitten werden, wobei die untenliegenden Bandbereiche, welche im Beton eingebettet liegen, belassen werden können. Die Verwendung von Kunststoffbändern hat den Vorteil, dass keine Rostbildung und damit verbundene Rostflecken an der Unterseite des Bodens auftreten können. Die Positionierung des Abdeckelementes 6 wird beispielsweise durch Auflage auf nach Innen gerichtete Flanschen 1'' des Kastengehäuses 1 realisiert.

Die Höhe des Abdeckelementes 6 wird vorzugsweise derart gross gewählt, dass damit alle Anforderungen an zu realisierende Bodenhöhen abgedeckt werden können. Damit kann die Anschlussdose in einer einzigen Baugrösse praktisch alle zu erwartenden Bedürfnisse abdecken, was zu einer vereinfachten Lagerhaltung und günstigerer Produktion beiträgt. Dieselbe Ausführung des Kastengehäuses 1 kann sowohl für den Einsatz als Anschlussdose wie auch als Durchgangsdose eingesetzt werden.

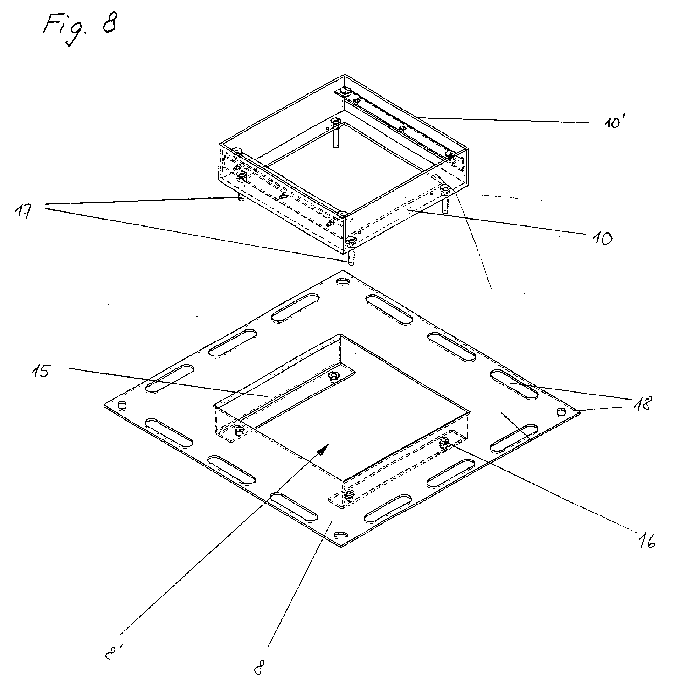

In Figur 8 ist noch die Ansicht auf den Rahmen 8 mit dazugehörigem Kragen 10 dargestellt. Der Rahmen 8 weist eine Öffnung 8' auf, deren Abmessungen geringer sind als die Öffnung des Kastengehäuses 1. Nach unten ragend sind zwei Trägerflanschen 15 ausgebildet, welche einerseits als Führung für den Kragen 10 dienen und andererseits auch die höhenverstellbaren Befestigungselemente für den Kragen 10 beinhalten. Beispielsweise können dies Gewindebohrungen 16 sein, in welche Schraubenstifte 17 des Kragens 10 einschraubbar sind. Dadurch lässt sich eine praktisch beliebige, stufenlose Einstellung der Höhe der Oberkante 10' des Kragens 10 gegenüber dem Rahmen 8 realisieren.

An den äusseren Rändern des Rahmens 8 sind Befestigungsöffnungen 18 ausgebildete, durch welche beispielsweise Schrauben oder ähnliche Befestigungselemente hindurchgeführt werden können, um den Rahmen 8 mit dem Beton des Bodens zu verbinden.

Durch diese Ausgestaltung des Rahmens 8 kann dieser unabhängig von der Lage des Kastengehäuses 1 über der entsprechenden Öffnung 1' angeordnet werden, ohne dass allfällige Positionierungsfehler des Kastengehäuses 1 sich auf die Lage und Position des Rahmens 8 und damit des Kragens 10 auswirken.

Der Kragen 10 wird vorteilhaft mit Einbausätzen beispielsweise für Steckdosen und Deckel mit Bürstenleisten ausgerüstet, um insbesondere im elektrischen Installationsbereich für Gebäude eingesetzt zu werden.

## Patentansprüche

1. Durchgangs- und Anschlussdose zur Verwendung in Betonböden mit einem schalenförmigen, nach oben offenen Kastengehäuse (1) und einem offenen Rahmen (8), **dadurch gekennzeichnet, dass** die Öffnung (1') des Kastengehäuses (1) mit einem lösbaren Abdeckelement (6) verschlossen ist, dessen Oberkante die Oberkante des Kastengehäuses (1) überragt und der Rahmen (8) eine Aussparung (8') aufweist, welche kleiner ist, als die Öffnung (1') des Kastengehäuses (1), und in welcher ein höhenverstellbarer Kragen (10) angeordnet ist, dessen Oberkante (10') die Oberseite des Rahmens (8) überragt, wobei der Rahmen (8) in eingebautem Zustand im Betonboden nicht mit dem Kastengehäuse (1) verbunden ist.

2. Durchgangs- und Anschlussdose nach Anspruch 1, **dadurch gekennzeichnet, dass** das Abdeckelement (6) aus einem geschäumten Kunststoff besteht, vorzugsweise aus Styropor.

3. Durchgangs- und Anschlussdose nach Anspruch 1 oder 2, **dadurch gekennzeichnet, dass** das Abdeckelement (6) als rechteckförmiger Quader ausgebildet ist.

4. Durchgangs- und Anschlussdose nach einem der Ansprüche 1 bis 3, **dadurch gekennzeichnet, dass** das Kastengehäuse (1) aus Stahlblech gefertigt ist und in das Innere des Gehäuses ragende Flansche (1'') als Auflager für das Abdeckelement (6) aufweist.

5. Durchgangs- und Anschlussdose nach einem der Ansprüche 1 bis 4, **dadurch gekennzeichnet, dass** das Kastengehäuse (1) an seiner Unterseite mit einem Armierungsgitter (2) verbunden ist, vorzugsweise verschweisst ist.

6. Durchgangs- und Anschlussdose nach einem der Ansprüche 1 bis 5, **dadurch gekennzeichnet, dass** das Abdeckelement (6) mittels um das Kastengehäuse (1) und Abdeckelement (6) herum geschlauften Bändern (14) befestigt ist, vorzugsweise Kunststoffbänder oder Blechbindern.

7. Durchgangs- und Anschlussdose nach einem der Ansprüche 1 bis 6, **dadurch gekennzeichnet, dass** der Rahmen (8) und Kragen (10) aus Stahlblech bestehen.

8. Durchgangs- und Anschlussdose nach einem der Ansprüche 1 bis 7, **dadurch gekennzeichnet, dass** der Rahmen (8) an seinem äusseren Randbereich Befestigungsöffnungen (18) zur Aufnahme von Befestigungselementen aufweist.

9. Durchgangs- und Anschlussdose nach einem der Ansprüche 1 bis 8, **dadurch gekennzeichnet, dass** der Rahmen (8) als Rechteckplatte ausgebildet ist und mindestens zwei von den inneren Kanten der Öffnung (8') nach unten abragende Flanschen (15) aufweist mit Befestigungsmitteln (16) zur höhenverstellbaren Befestigung des Kragens (10).

10. Durchgangs- und Anschlussdose nach einem der Ansprüche 1 bis 9, **dadurch gekennzeichnet, dass** der Kragen (10) mehrere, vorzugsweise vier Schraubstifte (17) zur höhenverstellbaren Befestigung mit dem Rahmen (8) aufweist.

11. Verfahren zur Anwendung von Durchgangs- und Anschlussdosen in Betonböden nach einem der Ansprüche 1 bis 10, **dadurch gekennzeichnet, dass** das Kastengehäuse (1) mit dem Armierungsgitter (2) mit eingesetztem Abdeckelement (6) mit der Armierung (3) der Schalung (5) des zu erstellenden Betonbodens an der dafür vorgesehenen Position verbunden wird, anschliessend der Beton (7) in resp. auf die Schalung (5) eingebracht wird, wobei die Oberkante des Betons (7) über der Oberkante des Kastengehäuses (1) zu liegen kommt, dass danach das Abdeckelement (6) aus dem Kastengehäuse (1) entnommen wird, wodurch ein Hohlraum gebildet wird, und der Rahmen (8) über dem Kastengehäuse (1) auf die Oberfläche des an- oder ausgehärteten Betonbodens aufgebracht wird, wobei die Öffnung (8') des Rahmens (8) über dem Hohlraum liegend angeordnet wird und danach der Kragen (10) in den Rahmen (8) eingesetzt wird, derart, dass die Oberkante (10') auf das spätere Niveau des fertigen Bodens zu liegen kommt.

12. Verfahren nach Anspruch 11, **dadurch gekennzeichnet, dass** das Kastengehäuse (1) mittels Drahtbindern (14) mit Armierungseisen (3) des zu erstellenden Bodens verbunden wird.

13. Verfahren nach Anspruch 11 oder 12, **dadurch gekennzeichnet, dass** die Öffnungen des Kastengehäuses (1) nach der Entfernung des Abdeckelementes (6) und/oder die Öffnung (8') des Rahmens (8) temporär mit einem Abdeckblech verschlossen wird, um das Eindringen von Verunreinigungen zu verhindern.
